# FASCICULE DE BREVET EUROPEEN

(11) **EP 0 648 644 B1**
(45) Date de publication et mention de la délivrance du brevet: **22.01.1997**
(21) Numéro de dépôt: 94470022.8
(22) Date de dépôt: 03.08.1994
(51) Int. Cl.: B60R 19/16

(54) **Butoir rotatif pour camions**
Rotierender Puffer für LKW
Rotary buffer for trucks

(30) Priorité: 13.08.1993 FR 9310026
(43) Date de publication de la demande: 19.04.1995
(73) Titulaire: S.C.I. DU MONSEIGNEUR (Société Civile Immobilière), F-88700 Rambervillers (FR)
(72) Inventeur: Lavergne, Dominique, F-88700 Rambervillers (FR)
(74) Mandataire: Poupon, Michel

(56) Documents cités:
- FR-A- 1 023 619
- FR-A- 1 038 120
- FR-A- 1 253 523
- FR-A- 2 183 507

## Description

La présente invention concerne un butoir d'accostement pour l'accostement d'un camion sur un quai.

A l'heure actuelle, les camions sont équipés sur la traverse horizontale arrière de la plate-forme et/ou en bout de chassis, de butoirs fixes en caoutchouc qui amortissent les chocs lors de l'accostement du camion à quai en vue de son chargement ou déchargement.

Cependant, en raisons des suspensions du véhicule ou de l'écrasement des pneus, ces butoirs subissent des arrachements par frottement sur le quai provoqués par les variations de hauteur de la plate-forme sous l'effet des variations de charge.

La présente invention vise à remédier à ce problème en proposant un butoir d'un type nouveau à fonction double : amortissement des chocs horizontaux lors de l'accostement, résistance à l'arrachement vertical lors des variations de charge.

Par ailleurs, on connait le document FR-1.023.619 montrant un pare-chocs perfectionné monté sur amortisseurs. Lors d'un choc et pour toute vitesse du véhicule, il se produit une force dont la composante normale est diminuée et la composante tangentielle augmentée. Cette fonction ne répond pas du tout à celle que doit remplir un butoir notamment la résistance à l'arrachement vertical lors des variations de charge, le véhicule étant à l'arrêt.

Le document FR-A-1 253 523 montre l'utilisation de rouleaux en caoutchouc montés horizontalement ou verticalement sur des axes pour la protection de poteaux, pylônes, véhicules etc..

Un butoir selon l'invention tel que défini dans la revendication 1 se caractérise en ce qu'il comporte au moins un tampon cylindrique en matériau amortisseur qui est traversé longitudinalement par un axe de rotation disposé horizontalement, ledit axe étant porté par un support fixé sur le quai ou fixé à l'arrière du camion.

Il est important, dans l'invention, que le butoir soit monté sur un élément fixe.

On comprendra mieux l'invention à l'aide de la description ci-après faite en référence aux figures annexées suivantes :
- **figure 1 :** vue de profil d'un butoir conforme à l'invention en position d'utilisation et fixé à l'arrière d'un camion,
- **figure 2 :** vue de face du butoir,
- **figure 3 :** vue de dessus du butoir,
- **figures 4 et 5 :** croquis de variantes de montage.

Un butoir selon l'invention se compose d'un support (1) et d'un ou plusieurs tampons cylindriques rotatifs (2) en matériau amortisseur par exemple en caoutchouc.

Le support (1) est fixé par exemple sur la traverse arrière (7) du véhicule et/ou en bout de chassis (8) par soudage ou boulonnage de sa plaque arrière (3), et ses deux paliers d'extrémité (4) portent et guident en rotation un axe porte-tampon (6) horizontal. Selon la longueur du butoir et le nombre de tampons rotatifs (2), un ou plusieurs paliers intermédiaires (5) sont prévus.

Les figures représentent des butoirs rotatifs montés à l'arrière d'un camion mais cette utilisation n'est pas limitative.

A l'inverse, on peut monter le ou les butoirs rotatifs sur le quai (9).

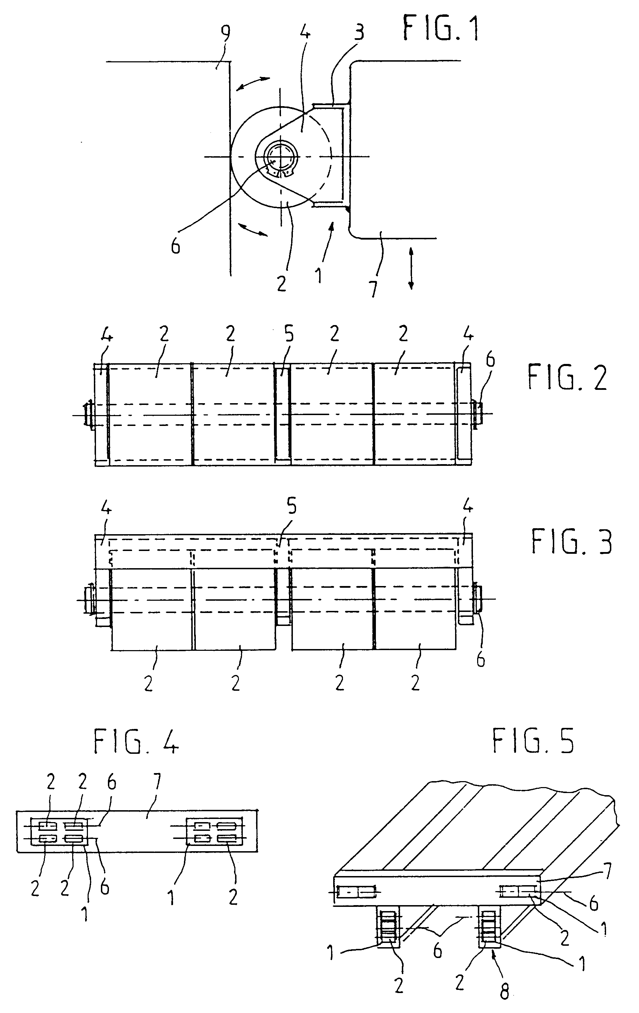

En outre, on peut prévoir un ou plusieurs butoirs dans des dispositions diverses par exemple :
- alignés à l'horizontale,
- disposés en plusieurs groupes de deux l'un au dessus de l'autre,
- des butoirs à plusieurs axes (6) parallèles (voir figures 4 et 5) montés sur la traverse arrière et sur le chassis,
- etc..., selon le type de véhicule ou le type d'accostement.

Lors des variations de niveau de la plate-forme du véhicule, le frottement sur le quai se transforme en une rotation du ou des tampons (2) dans un sens ou dans l'autre sans arrachement du support (1).

Les butoirs selon l'invention peuvent être montés sur les véhicules neufs ou anciens quelle que soit leur marque.

L'invention permet de réaliser une économie sur les frais d'entretien et réparation d'un parc de véhicules.

## Revendications

1. Butoir fixé sur un quai chargement/déchargement ou fixé à l'arrière d'un camion, comportant au moins un tampon en matériau amortisseur (2) pour l'accostement du camion (7) sur le quai (9), caractérisé en ce que le tampon est cylindrique (2) et est traversé longitudinalement par un axe de rotation (6) disposé horizontalement, ledit axe (6) étant porté par un support (1) fixé sur le quai (9) ou fixé à à l'arrière du camion (7).

2. Butoir selon la revendication 1 caractérisé en ce que le support (1) comporte plusieurs tampons rotatifs alignés sur le même axe de rotation (6).

3. Butoir selon l'une des revendications 1 à 2 caractérisé en ce que le support (1) comporte plusieurs axes de rotation (6) parallèles portant chacun un ou plusieurs tampons (2).

## Claims

1. Stop mounted on a loading/unloading platform or mounted on the rear of a lorry, comprising at least one buffer (2) formed from damping material for stopping the lorry (7) on the platform (9), characterised in that the buffer (2) is cylindrical and is traversed longitudinally by a rotating axle (6) disposed horizontally, said axle (6) being carried by a support (1) mounted on the platform (9) or mounted on the rear of the lorry (7).

2. Stop according to claim 1, characterised in that the support (1) comprises a plurality of rotatable buffers aligned on the same rotating axle (6).

3. Stop according to one of claims 1 to 2, characterised in that the support (1) comprises a plurality of parallel rotating axles (6), each carrying one or more buffers (2).

## Patentansprüche

1. Puffer, welcher an einer Lade-/Entladerampe oder der Rückseite eines Lastkraftwagens befestigt ist und zumindest einen Dämpfkörper (2) für die Anlage eines Lastkraftwagens (7) an der Rampe (9) hat, **dadurch gekennzeichnet**, dass der Körper (2) zylindrisch ist und durch ihn eine horizontal ausgerichtete Drehachse (6) hindurchführt, wobei die genannte Achse (6) von einem Lager (1) gehalten wird, welche an der Rampe (9) oder der Rückseite des Lastkraftwagens (7) befestigt ist.

2. Puffer nach Anspruch 1, **dadurch gekennzeichnet**, dass das Lager 1 mehrere drehbare Dämpfkörper aufweist, welche auf derselben Drehachse (6) hintereinander angeordnet sind.

3. Puffer nach einem der Ansprüche 1 bis 2, **dadurch gekennzeichnet**, dass das Lager (1) mehrere parallele Drehachsen (6) aufweist, welche jeweils einen Dämpfkörper (2) oder mehrere tragen.
